# NEW EUROPEAN PATENT SPECIFICATION

(11) **EP 3 861 260 B2**
(45) Date of publication and mention of the opposition decision: **22.10.2025**
(45) Mention of the grant of the patent: 06.04.2022
(21) Application number: 19787109.8
(22) Date of filing: 03.10.2019
(51) Int. Cl.: F24F 3/14, F16K 27/04, F24F 12/00, B01D 53/26

(54) **METHOD AND APPARATUS FOR DEHUMIDIFICATION**
VERFAHREN UND VORRICHTUNG ZUR ENTFEUCHTUNG
PROCÉDÉ ET APPAREIL DE DÉSHUMIDIFICATION

(30) Priority: 05.10.2018 SE 1851206
(43) Date of publication of application: 11.08.2021
(73) Proprietor: Corroventa Avfuktning AB, 56435 Bankeryd (SE)
(72) Inventor: HENRIKSSON, Magnus, 554 66 Jönköping (SE)
(74) Representative: Bergenstråhle & Partners AB
(86) International application number: PCT/SE2019/050961
(87) International publication number: WO 2020/071991

(56) References cited:
- WO-A1-2015/063279
- JP-A- 2002 276 997
- JP-A- 2008 073 688
- US-B1- 7 050 707

## Description

### Technical field

The present invention relates generally to an apparatus for dehumidification of air and more specifically to a method and an apparatus which can be switched between different operating modes.

### Background art

The international patent publication No. WO9006165 A1 describes a method and an apparatus for dehumidification of air wherein process air is dehumidified through passing a drying rotor comprising moisture adsorbing means. In order to reach high temperatures radiation heat is used from a heating element, for example a radiator, for regeneration of an adsorption means comprised in a rotor.

One problem with this kind of solution is that the wet regeneration air flow must be led away from the space being dried. This can normally be achieved by passing the wet air-flow to a room or to the surroundings, for example with the aid of a hose. There are cases, however, when this known technique can only be applied with difficulty and at relatively high costs, for instance where there are no vents or windows or when these windows cannot be opened. Other examples are when cellar air or the air in a bank vault shall be dehumidified and dried. There may also be other reasons, such as a risk for spreading contaminations or mould.

This problem is normally solved by connecting a condenser/heat-exchanger to a dehumidifier or to integrate a heat-exchanger in a dehumidifier. In principle, a condenser is a heat-exchanger in which wet air is brought into heat-exchange contact with cold air, therewith extracting and collecting the moisture in the wet air while heating the cold air delivered to the heat exchanger. In the international patent publication No. WO9304764 A1 this is solved by delivering wet regenerating air exiting from the dehumidifier to one side of a condenser or heat-exchanger so as to deliver energy to the process air delivered to the other side of said condenser or heat-exchanger for cooling purposes; collecting and/or carrying away condensation obtained from the regenerating air; and delivering the process air heated in the preceding step to the dehumidifier so as to extract moisture from the process air and further dry said process air. This solves the problem of leading away the wet regeneration air flow. However, it is not always known in advance which solution is the best to apply to a specific task. This can lead to extra transportation costs which in turn has a negative effect on the environment. The international patent publication No. WO2015/063279 A1 describes a system according to the preamble of claim 1 and a method according to the preamble of claim 11, wherein regeneration air in the form of superheated steam is used in association with a desiccant wheel.

### Summary of invention

An object of the present invention is to avoid the problem of having to choose the kind of dehumidifier in advance and to provide a versatile dehumidifier which can be switched between different operating modes.

According to a first aspect of the invention, a dehumidifier is provided according to claim 1. A versatile dehumidifier which can be switched between different operating modes is thereby provided.

In a preferred embodiment, the drying device comprises a rotor. This provides for a compact device wherein the moisture adsorption means in sectors of the rotor are alternately used for drying process air and being regenerated, depending on the position of the rotor.

In a preferred embodiment, a distribution chamber is provided in fluid connection with the second inlet of the heat-exchanger, wherein, with the valve in the second position, wet regenerating air exiting from the valve is delivered to the distribution chamber.

In a preferred embodiment, a condensation trough is provided below the heat exchanger, in which water condensed from the wet regeneration air will collect. A condensation water pump may optionally be connected to the condensation trough for removing condensation water from the trough.

In a preferred embodiment, the valve comprises has an inlet end in fluid connection with the rotor and an outlet end opposite the inlet end and in fluid connection with the regeneration air outlet, wherein the valve is essentially tubular and comprises an inner tube and an outer tube, wherein the inner tube exhibits an end wall opposite the inlet end, and wherein the inner and outer tubes are coaxial and the inner tube is rotatably journaled within the outer tube. This design provides a compact valve which is easy to switch between different positions.

In a preferred embodiment, the inner tube is provided with an opening in its envelope surface for the function of releasing regeneration air in one of two directions, depending on the rotational position of the inner tube: in the first position of the valve to the regeneration air outlet and in the second position of the valve to the second inlet of the heat-exchanger.

In a preferred embodiment, the outer tube is provided with a first opening in fluid connection with the second inlet of the heat-exchanger and a second opening in fluid connection with the regeneration air outlet.

In a preferred embodiment, a bypass chamber is provided, wherein the outer tube is provided with a third opening, wherein the second and third openings of the outer tube are in fluid connection with the bypass chamber and wherein the third opening is in fluid connection with the regeneration air outlet.

In a preferred embodiment, the first inlet of the heat-exchanger is connected to the process air inlet. Thereby, the process air can be used for cooling the wet regeneration air.

### Brief description of drawings

The invention is now described, by way of example, with reference to the accompanying drawings, in which:
Fig. 1 is a schematic overall sectional view of a dehumidifier according to the invention;
Figs 2a and 2b show perspective views of a valve comprised in the dehumidifier of Fig. 1;
Fig. 3a is a perspective view of the dehumidifier of Fig. 1 with removed cover plate, showing the interior of the dehumidifier, in a first mode of operation;
Fig. 3b is a cross-sectional view of a heat-exchanger comprised in the apparatus of Fig. 3a;
Fig. 3c is a sectional view through the valve comprised in the dehumidifier of Fig. 3a in the first mode of operation;
Fig. 4a is a perspective view of the dehumidifier of Fig. 1 with removed cover plate, showing the interior of the dehumidifier, in a second mode of operation;
Fig. 4b is a cross-sectional view of a heat-exchanger comprised in the apparatus of Fig. 4a; and
Fig. 4c is a sectional view through the valve comprised in the dehumidifier of Fig. 4a in the second mode of operation.

### Description of embodiments

In the following, a detailed description of an apparatus for dehumidification according to the invention will be given. It will be realized that when reference is made to directions, such as "up" or "down", these are to be interpreted as during normal operation of the apparatus. Also, when the term "in fluid connection" is used, it is to be interpreted as including the ability to conduct air from one point to another.

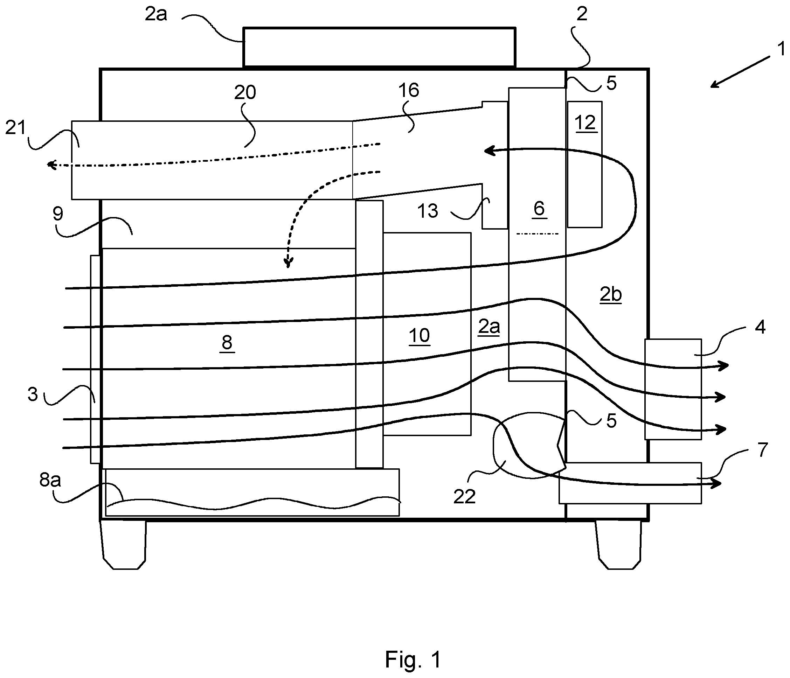

With reference to Fig. 1 a dehumidifier comprises a housing 2 provided with an inlet 3 for process air and an outlet 4 for dry process air. A handle 2a on the housing 2 is provided for facilitate carrying of the dehumidifier 1. A partition wall 5 is provided in the housing 2 exhibiting a hole housing a drying device in the form of a rotor 6, the journaling of which is not shown in the figures. The rotor is driven by an electrical motor (not shown), directly or indirectly via a belt, for example. The rotor is provided with a suitable sealing (not shown) sealing the rotor against the partition wall 5.

The rotor 6 exhibits a large number of passages, in which an adsorption means in the form of a desiccant, for example silica gel, a molecular sieve or the like is provided, whereby an almost infinite regeneration of the rotor is possible.

There is provided a fan 10, such as a centrifugal fan, adapted to draw damp air, in the following referred to as process air, into the inlet 3. The speed of the fan can be controlled by means of a controller a potentiometer or the like between a lowest speed and a highest speed, whereby the amount of drawn process air can be controlled in dependence of a desired operating mode. This controller may generate a step-less external control signal varying between 0-10 VDC or operate according to a PWM control scheme. The speed control may also be effected through a potentiometer or the like. As an alternative to step-less control, the speed of the fan can be controlled between the lowest and the highest speeds or between several speeds by means of a switch, for example.

The fan creates an overpressure in the part 2a of the housing which is provided adjacent to the partition wall 5. The process air which has been drawn in and been pressurized by the fan 10 flows through the rotor 6 and is dehumidified herein. The major part of this flow of process air flows into a chamber 2b provided on the other side of the partition wall 5 and leaves the dehumidifier through the outlet 4 for process air. This dried process air is returned to a space or room to be dried, for example to a water damage or to another process wherein air with a low moisture content is used.

A minor part of the air that flows through the rotor 6, for example one fifth of the incoming flow of process air, is captured by a first cover 12, preferably made of aluminium or other heat resistant material, which is mounted on the low pressure side of the rotor 6. The first cover 12 preferably has the shape of a circle sector except the portion corresponding to the rotor axle. A corresponding second cover 13 is provided on the high pressure side of the rotor 6.

As previously mentioned a part, in one embodiment 20 %, of the process air flowing through the rotor is captured by the first cover and this deflected air, the regeneration air, is heated by a heating element, preferably in the form of a PTC heater, provided in the first cover 12. The heating element is thus adapted to heat air flowing by and which then flows though the rotor and heats this, whereby moisture captured by the desiccant is removed by the regeneration air and is bound thereto, whereafter the damp regeneration air leaving the rotor is captured by the second cover 13 and is guided by a tube 16 and to a valve 20, the function of which will be explained in detail below.

A temperature sensor (not shown) may optionally be provided in close proximity to and preferably downstream of the heating element for measuring of the temperature up to which the heating element heats the air flowing by. In addition to or alternatively a flow sensor may optionally be provided for measuring the air flow through the rotor. These parameters may be used for adjusting the operation of the dehumidifier.

An outlet 7 for bypass air is provided on the high-pressure side 2a from which process air can exit the dehumidifier 2 without having been dried. This outlet is optional and is used to create an underpressure in the dehumidifier. This is advantageous since the distribution of dust and other particles and also odour from the dehumidifier is decreased.

A condenser/heat-exchanger 8 is provided adjacent to the inlet 3 for process air and below the valve 20. This heat-exchanger 8 comprises lamellar between which heat-exchange is effected between wet regenerating air, which is delivered from the valve 20, and process air which is delivered to the condenser/heat-exchanger from the inlet 3.

Thus, in a first operating mode, wet regenerating air exiting from the valve 20 is delivered to a condensation or distribution chamber 9 above, i.e., in fluid connection with a top inlet of the heat-exchanger for the purpose of delivering energy to the process air, which is delivered to the front side, in Fig. 1 the left side, of the heat-exchanger 8. This is shown with a dashed arrow in Fig. 1. The process air is therewith used for cooling purposes and will be slightly heated as it takes up energy from the wet regenerating air, the water vapour of which will condense and be collected in a trough 8a below the heat-exchanger 8 from where it can be removed through a pipe (not shown), preferably by means of a condensation water pump 22. The slightly heated process air then enters the chamber 2a and then the rotor 6, in which the air is dehumidified.

In order to make the heat-exchanger more effective, a number of cells can be coupled sequentially so that the efficiency of the heat-exchanger will correspond to a contraflow heat-exchanger, despite each cell operating in crossflow. The efficiency is greatly improved even when only two cells are coupled.

In a second operating mode, the regeneration air is conducted to a regeneration air outlet 21, shown by the dash-dotted arrow in Fig. 1, to be further conducted to the outside of the space to be dehumidified by means of a hose or the like (not shown).

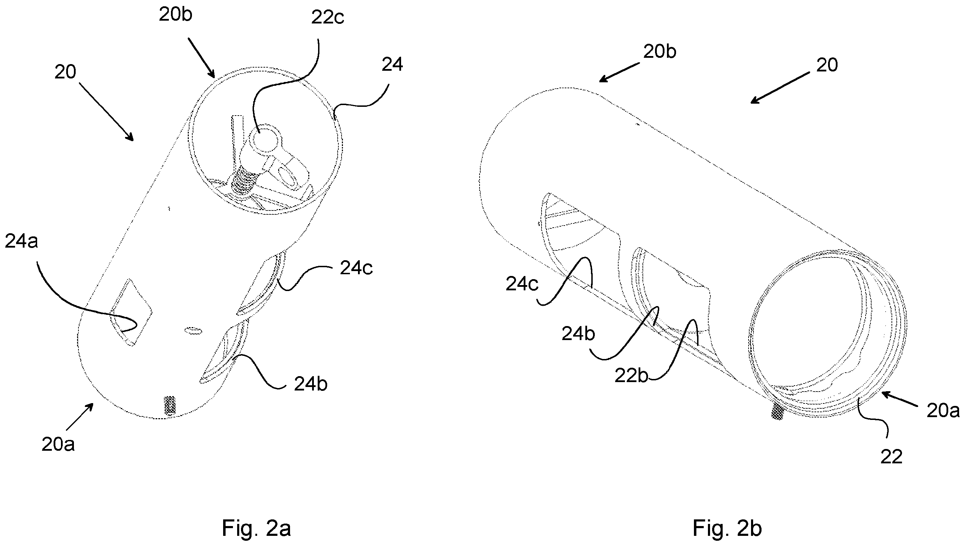

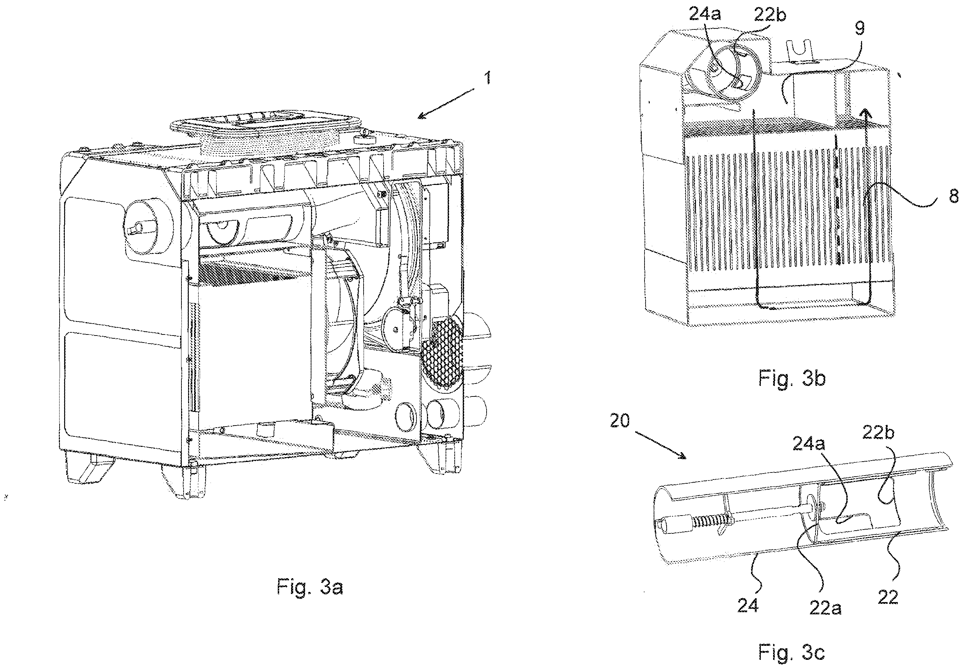

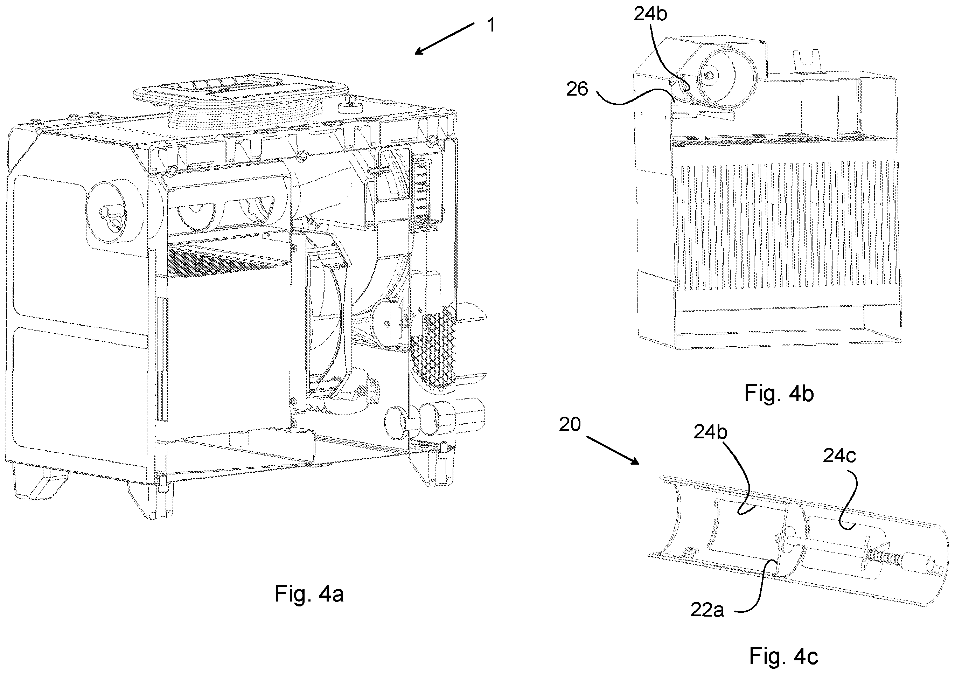

The valve 20 will now be explained in detail with reference to Figs. 2a and 2b, showing different perspective view of the valve. The valve 20 has an inlet end 20a facing the rotor 6, i.e., in fluid connection with the regeneration portion of the rotor, and an outlet end 20b opposite the inlet end, which is in fluid connection with the regeneration air outlet 21. In this embodiment, the valve 20 is essentially tubular and comprises an inner tube 22 and an outer tube 24. The inner and outer tubes 22, 24 are coaxial and the inner tube 22 is rotatably journaled within the outer tube 24. The inner tube 22 is shorter than the outer tube 24, preferably about half the length, and is provided with an open end facing the rotor 5 and an end wall 22a opposite the open end which is situated in the mid portion of the outer tube 24, see also the sectional views in Figs. 3c and 4c.

The inner tube 22 is provided with an opening 22b in its envelope surface for the function of releasing regeneration air in one of two directions, depending on the operating mode, i.e., depending on the rotational position of the inner tube 22. This switching of mode is effected by rotating the inner tube 22 to align the opening 22b with either a first opening 24a or a second opening 24b in the outer tube. The outer tube is also provided with a third opening 24c in the portion not overlapping the inner tube 22. The rotation or turning of the inner tube 22 is facilitated by means of manually turning a handle 22c attached to the inner tube 22, although any means for turning the inner tube, such as an electric motor, may be provided.

The switching between the two operating modes will now be described with reference to Figs. 3a-c, showing a first operating mode wherein the regeneration air is conducted to and through the heat-exchanger 8, and to Figs. 4a-c, showing a second operating mode wherein the regeneration air is conducted out of the dehumidifier 1 through the regeneration air outlet 21.

In Figs. 3a-c there is shown a rotational position of the inner tube 22, wherein the opening 22b in the inner tube 22 is aligned with the first opening 24a in the outer tube 24. The outer tube 24 is mounted so that this first opening 24a is in fluid connection with the distribution chamber 9 above the heat-exchanger 8, see the cross-sectional view in Fig. 3b. This means that wet regeneration air entering the valve 20 through the first end thereof will be conducted to the heat-exchanger 8, there participating in heat-exchanging with process air. The end wall 22a of the inner tube 22 will prevent the regeneration air from reaching the other end of the valve 20 and thereby keep the regeneration air within the dehumidifier.

In Fig. 3b it is schematically shown with an arrow how the wet regeneration air leaves the condensation or distribution chamber 9. Thus, one function of this chamber is to ensure that the wet regeneration air is distributed between the multiple channels of the heat exchanger 9. The wet regeneration air passes a first portion of the heat exchanger 8, then a volume below the heat exchanger where condensed water is collected and returns via a second portion of the heat exchanger to another space above the heat exchanger to mix with the process air. In the figure, the division between the first and second portions of the heat exchanger 8 is shown with a dashed line. The condensation mainly takes place in channels of the heat exchanger, although some condensation can occur also in the distribution chamber 9.

In Figs. 4a-c there is shown a rotational position of the inner tube 22, wherein the opening 22b in the inner tube 22 is aligned with the second opening 24b in the outer tube 24. The outer tube 24 is mounted to that this second opening 24b and also the third opening 24c are in fluid connection with a bypass chamber 26, see Fig. 4b, which is sealed from the rest of the interior of the dehumidifier 1. This means that wet regeneration air entering the valve 20 through the first end thereof will be conducted out of the opening 22b of the inner tube 22 and the second opening 24b of the outer tube 24, which is aligned therewith, and into the bypass chamber 26. From there, the regeneration air enters the third opening 24c in the outer tube 24 and onward to the second end of the valve, from which it exits the dehumidifier 1 through the regeneration air outlet 21.

In summary, when air is dried, process air is brought to pass a drying device 6 provided with moisture adsorption means; and, after having been dehumidified, depart through a process air outlet 4. Regeneration air is heated and then brought to pass through the drying device 6 for regeneration of the moisture adsorption means. In a first operation mode, the drying device 6 and a regeneration air outlet 21 are brought into fluid connection, allowing wet regeneration air to exit through a regeneration air outlet. In a second operation mode, the drying device and a second inlet of a heat-exchanger 8 are brought into fluid connection, allowing an exchange of heat between wet regeneration air having passed through the drying device 6 and process air having entered a first inlet of the heat-exchanger 8.

A preferred embodiment of a dehumidifier according to the invention has been described. It will be appreciated that this may be varied within the scope of the appended claims without departing from the inventive idea. Thus, although a drying device in the form of a driven rotor has been described, this could also be a static device which is intermittently dried.

A specific design of the valve has been described. It will be realized that any kind of two-way valve having the ability to forward incoming air to one of two different destinations can be used, such as a flap valve.

## Claims

1. A dehumidifier (1) comprising
- a housing (2) provided with a process air inlet (3) and a process air outlet (4);
- a drying device (6) provided with moisture adsorption means;
- means (12) for heating regeneration air, wherein the regeneration air, during operation, passes through the drying device (6) for regeneration of the moisture adsorption means;
- a regeneration air outlet (21); and
- a heat-exchanger (8) with a first inlet and a second inlet adapted for effecting an exchange of heat between air entering through the first inlet and air entering through the second inlet;
**characterized by**
- a single fan (10) creting an overpressure is one part of the housing for effecting a flow of the process and regeneration air and adapted to bring process air entering through the process air inlet (3) to pass the drying device (6) and, subsequent to having been dehumidified, depart though the process air outlet (4), and
- a valve (20) switchable between
∘ a first position, wherein the drying device and the regeneration air outlet (21) are in fluid connection, allowing wet regeneration air to exit through the regeneration air outlet; and
∘ a second position, wherein the drying device and the second inlet of the heat-exchanger (8) are in fluid connection, allowing an exchange of heat between wet regeneration air having passed through the drying device (6) and air entered through the first inlet of the heat-exchanger, wherein the heat exchanger (8) is configured so that wet regeneration air will be cooled and water vapour of the wet regeneration air will condense, and the regeneration air will then mix with the process air.

2. The dehumidifier according to claim 1, wherein the drying device (6) comprises a rotor.

3. The dehumidifier according to claim 1 or 2, comprising a distribution chamber (9) in fluid connection with the second inlet of the heat-exchanger (8), wherein, with the valve in the second position, wet regenerating air exiting from the valve (20) is delivered to the distribution chamber (9).

4. The dehumidifier according to any one of claims 1-3, comprising a condensation trough (8a) below the heat exchanger, in which water condensed from the wet regeneration air will collect.

5. The dehumidifier according to claim 4, comprising a condensation water pump (22) connected to the condensation trough (8a) for removing condensation water from the trough (8a).

6. The dehumidifier according to any one of claims 1-5, wherein the valve (20) comprises has an inlet end (20a) in fluid connection with the rotor (6) and an outlet end (20b) opposite the inlet end and in fluid connection with the regeneration air outlet (21), wherein the valve (20) is essentially tubular and comprises an inner tube (22) and an outer tube (24), wherein the inner tube exhibits an end wall (22a) opposite the inlet end, and wherein the inner and outer tubes (22, 24) are coaxial and the inner tube (22) is rotatably journaled within the outer tube (24).

7. The dehumidifier according to claim 6, wherein the inner tube (22) is provided with an opening (22b) in its envelope surface for the function of releasing regeneration air in one of two directions, depending on the rotational position of the inner tube (22): in the first position of the valve (20) to the regeneration air outlet (21) and in the second position of the valve (20) to the second inlet of the heat-exchanger (8).

8. The dehumidifier according to claim 7, wherein the outer tube (24) is provided with a first opening (24a) in fluid connection with the second inlet of the heat-exchanger (8) and a second opening (24b) in fluid connection with the regeneration air outlet (21).

9. The dehumidifier according to claim 7, comprising a bypass chamber (26), wherein the outer tube (24) is provided with a third opening (24c), wherein the second and third openings (24b, 24c) of the outer tube (24) are in fluid connection with the bypass chamber (26) and wherein the third opening is in fluid connection with the regeneration air outlet (21).

10. The dehumidifier according to any one of claims 1-9, wherein the first inlet of the heat-exchanger (8) is connected to the process air inlet (3).

## Patentansprüche

1. Entfeuchter (1), umfassend
- ein Gehäuse (2), bereitgestellt mit einem Prozesslufteinlass (3) und einem Prozessluftauslass (4);
- eine Trockenvorrichtung (6), bereitgestellt mit Feuchtigkeitsadsorptionsmitteln;
- Mitteln (12) zum Erhitzen von Regenerationsluft, wobei die Regenerationsluft während des Betriebs durch die Trockenvorrichtung (6) geht, um die Feuchtigkeitsadsorptionsmittel zu regenerieren;
- einen Regenerationsluftauslass (21); und
- einen Wärmetauscher (8) mit einem ersten Einlass und einem zweiten Einlass, der geeignet zu einem Wärmeaustausch zwischen der durch den ersten Einlass eintretenden Luft und der durch den zweiten Einlass eintretenden Luft ist;
**gekennzeichnet durch**
- einen einzelnen Lüfter (10), der einen Überdruck in einem Teil des Gehäuses erzeugt, um eine Auswirkung auf den Durchfluss der Prozess- und Regenerationsluft zu bewirken, und der so ausgelegt ist, dass er die durch den Prozesslufteinlass (3) eintretende Prozessluft durch die Trockenvorrichtung (6) leitet und sie nach der Entfeuchtung durch den Prozessluftauslass (4) austreten lässt, und
- ein Ventil (20), umschaltbar zwischen
∘ einer ersten Position, wobei die Trockenvorrichtung und der Regenerationsluftauslass (21) in Fluidverbindung stehen, sodass feuchte Regenerationsluft durch den Regenerationsluftauslass austreten kann; und
∘ einer zweiten Position, wobei die Trockenvorrichtung und der zweite Einlass des Wärmetauschers (8) in Fluidverbindung stehen, wodurch ein Wärmeaustausch zwischen der feuchten Regenerationsluft, die die Trockenvorrichtung (6) durchlaufen hat, und der Luft, die durch den ersten Einlass des Wärmetauschers eingetreten ist, ermöglicht wird, wobei der Wärmetauscher (8) so konfiguriert ist, dass die feuchte Regenerationsluft gekühlt wird und der Wasserdampf der feuchten Regenerationsluft kondensiert, woraufhin sich die Regenerationsluft mit der Prozessluft vermischt.

2. Entfeuchter nach Anspruch 1, wobei die Trockenvorrichtung (6) einen Rotor umfasst.

3. Entfeuchter nach Anspruch 1 oder 2, umfassend eine Verteilerkammer (9), die in Fluidverbindung mit dem zweiten Einlass des Wärmetauschers (8) steht, wobei bei Ventil in der zweiten Position die aus dem Ventil (20) austretende feuchte Regenerationsluft an die Verteilerkammer (9) abzugeben ist.

4. Entfeuchter nach einem der Ansprüche 1-3, umfassend eine Kondensationsmulde (8a) unterhalb des Wärmetauschers, in der sich das aus der feuchten Regenerationsluft kondensierte Wasser sammelt.

5. Entfeuchter nach Anspruch 4, umfassend eine Kondensationswasserpumpe (22), die mit der Kondensationsmulde (8a) verbunden ist, um Kondenswasser aus der Mulde (8a) zu entfernen.

6. Entfeuchter nach einem der Ansprüche 1-5, wobei das Ventil (20) ein Einlassende (20a) in Fluidverbindung mit dem Rotor (6) und ein Auslassende (20b) gegenüber dem Einlassende und in Fluidverbindung mit dem Regenerationsluftauslass (21) umfasst, wobei das Ventil (20) im Wesentlichen rohrförmig ist und ein Innenrohr (22) und ein Außenrohr (24) umfasst, wobei das Innenrohr eine dem Einlassende gegenüberliegende Stirnwand (22a) aufweist, und wobei das Innen- und das Außenrohr (22, 24) koaxial sind und das Innenrohr (22) drehbar innerhalb des Außenrohrs (24) gelagert ist.

7. Entfeuchter nach Anspruch 6, wobei das Innenrohr (22) mit einer Öffnung (22b) in seiner Hüllfläche bereitgestellt ist, um Regenerationsluft in Abhängigkeit von der Drehung des Innenrohrs (22) in eine von zwei Richtungen freizusetzen: in der ersten Position des Ventils (20) zum Regenerationsluftauslass (21) und in der zweiten Position des Ventils (20) zum zweiten Einlass des Wärmetauschers (8).

8. Entfeuchter nach Anspruch 7, wobei das Außenrohr (24) mit einer ersten Öffnung (24a) in Fluidverbindung mit dem zweiten Einlass des Wärmetauschers (8) und einer zweiten Öffnung (24b) in Fluidverbindung mit dem Regenerationsluftauslass (21) bereitgestellt ist.

9. Entfeuchter nach Anspruch 7, umfassend eine Umgebungskammer (26), wobei das Außenrohr (24) mit einer dritten Öffnung (24c) bereitgestellt ist, wobei die zweite und dritte Öffnung (24b, 24c) des Außenrohrs (24) in Fluidverbindung mit der Umgebungskammer (26) stehen und wobei die dritte Öffnung in Fluidverbindung mit dem Regenerationsluftauslass (21) steht.

10. Entfeuchter nach einem der Ansprüche 1-9, wobei der erste Einlass des Wärmetauschers (8) mit dem Prozesslufteinlass (3) verbunden ist.

## Revendications

1. Déshumidificateur (1) comprenant
- un boîtier (2) doté d'une admission d'air de traitement (3) et d'une évacuation d'air de traitement (4) ;
- un dispositif (6) de séchage doté de moyens d'adsorption d'humidité ;
- des moyens (12) de chauffage d'air de régénération, dans lequel l'air de régénération, pendant le fonctionnement, traverse le dispositif (6) de séchage pour la régénération des moyens d'adsorption d'humidité ;
- une évacuation d'air de régénération (21) ; et
- un échangeur (8) de chaleur avec une première admission et une seconde admission adaptées pour effectuer un échange de chaleur entre l'air entrant par la première admission et l'air entrant par la seconde admission ;
**caractérisé par**
- un ventilateur (10) unique créant une surpression dans une partie du boîtier pour entraîner un flux d'air de traitement et de régénération et adapté pour amener l'air de traitement entrant à travers l'admission d'air de traitement (3) à traverser le dispositif (6) de séchage et, après avoir été déshumidifié, à partir à travers l'évacuation d'air de traitement (4), et
- une valve (20) pouvant basculer entre
∘ une première position, dans laquelle le dispositif de séchage et l'évacuation d'air de régénération (21) sont en raccordement de fluide, permettant à l'air de régénération humide de sortir à travers l'évacuation d'air de régénération ; et
∘ une seconde position, dans laquelle le dispositif de séchage et la seconde admission de l'échangeur (8) de chaleur sont en raccordement de fluide, permettant un échange de chaleur entre l'air de régénération humide ayant traversé le dispositif (6) de séchage et de l'air entrant par la première admission de l'échangeur de chaleur, dans lequel l'échangeur (8) de chaleur est configuré afin que l'air de régénération humide soit refroidi et que la vapeur d'eau de l'air de régénération humide se condense, et que l'air de régénération se mélange ensuite à l'air de traitement.

2. Déshumidificateur selon la revendication 1, dans lequel le dispositif (6) de séchage comprend un rotor.

3. Déshumidificateur selon la revendication 1 ou la revendication 2, comprenant une chambre de distribution (9) en raccordement de fluide avec la seconde admission de l'échangeur (8) de chaleur, dans lequel, avec la valve dans la seconde position, de l'air de régénération humide sortant de la valve (20) est délivré dans la chambre de distribution (9).

4. Déshumidificateur selon l'une quelconque des revendications 1 à 3, comprenant un bac (8a) de condensation sous l'échangeur de chaleur, dans lequel de l'eau condensée de l'air de régénération humide s'accumulera.

5. Déshumidificateur selon la revendication 4, comprenant une pompe (22) à eau de condensation raccordée au bac (8a) de condensation pour évacuer l'eau de condensation du bac (8a).

6. Déshumidificateur selon l'une quelconque des revendications 1 à 5, dans lequel la valve (20) comprend une extrémité d'admission (20a) en raccordement de fluide avec le rotor (6) et une extrémité d'évacuation (20b) opposée à l'extrémité d'admission et en raccordement de fluide avec l'évacuation d'air de régénération (21), dans lequel la valve (20) est essentiellement tubulaire et comprend un tube intérieur (22) et un tube extérieur (24), dans lequel le tube intérieur présente une paroi (22a) d'extrémité opposée à l'extrémité d'admission, et dans lequel les tubes intérieur et extérieur (22, 24) sont coaxiaux et le tube intérieur (22) est tourillonné de manière rotative à l'intérieur du tube extérieur (24).

7. Déshumidificateur selon la revendication 6, dans lequel le tube intérieur (22) est doté d'une ouverture (22b) dans sa surface d'enveloppe pour la fonction de libération d'air de régénération dans l'une des deux directions, en fonction de la position de rotation du tube intérieur (22) : dans la première position de la valve (20) vers l'évacuation d'air de régénération (21) et dans la seconde position de la valve (20) vers la seconde admission de l'échangeur (8) de chaleur.

8. Déshumidificateur selon la revendication 7, dans lequel le tube extérieur (24) est doté d'une première ouverture (24a) en raccordement de fluide avec la seconde admission de l'échangeur (8) de chaleur et d'une deuxième ouverture (24b) en raccordement de fluide avec l'évacuation d'air de régénération (21).

9. Déshumidificateur selon la revendication 7, comprenant une chambre de dérivation (26), dans lequel le tube extérieur (24) est doté d'une troisième ouverture (24c), dans lequel les deuxième et troisième ouvertures (24b, 24c) du tube extérieur (24) sont en raccordement de fluide avec la chambre de dérivation (26) et dans lequel la troisième ouverture est en raccordement de fluide avec l'évacuation d'air de régénération (21).

10. Déshumidificateur selon l'une quelconque des revendications 1 à 9, dans lequel la première admission de l'échangeur (8) de chaleur est raccordée à l'admission d'air de traitement (3).
